# EUROPÄISCHE PATENTSCHRIFT

(11) **EP 1 343 589 B1**
(45) Veröffentlichungstag und Bekanntmachung des Hinweises auf die Patenterteilung: **11.02.2009**
(21) Anmeldenummer: 01270375.7
(22) Anmeldetag: 26.11.2001
(51) Int. Cl.: B03B 5/30, B01D 21/00

(54) **VORRICHTUNG UND VERFAHREN ZUR STOFFTRENNUNG**
DEVICE AND METHOD FOR SEPARATING SUBSTANCES
PROCEDE ET DISPOSITIF DE SEPARATION DE SUBSTANCES

(30) Priorität: 13.12.2000 DE 10061887
(43) Veröffentlichungstag der Anmeldung: 17.09.2003
(73) Patentinhaber: Ticona GmbH, 65451 Kelsterbach (DE)
(72) Erfinder: HAUBS, Michael, 55545 Bad Kreuznach (DE); WAGENER, Reinhard, 65719 Hofheim (DE)
(86) Internationale Anmeldenummer: PCT/EP2001/013720
(87) Internationale Veröffentlichungsnummer: WO 2002/047795

(56) Entgegenhaltungen:
- WO-A-00/56417
- DD-B- 214 767
- US-A- 5 564 574
- PATENT ABSTRACTS OF JAPAN vol. 1, no. 70, 8. Juli 1977 (1977-07-08) & JP 52 035769 A (HIRATA AKIRA), 18. März 1977 (1977-03-18)

## Beschreibung

Die Erfindung betrifft eine Vorrichtung zur Stofftrennung mittels Gegenstromwaschung gemäß dem Oberbegriff des Anspruches 1 sowie ein Verfahren zur Stofftrennung mittels Gegenstromwaschung gemäß dem Oberbegriff des Anspruchs 15.

Eine gattungsgemäße Vorrichtung weist einen Behälter mit einem ersten Endbereich, an welchem eine erste Eintrittsöffnung für den Eintritt eines Stoffgemisches und eine erste Austrittsöffnung für den Austritt einer abzutrennenden Stoffkomponente des Stoffgemisches und eines Waschfluids vorgesehen ist, einen dem ersten Endbereich axial gegenüberliegenden zweiten Endbereich, an welchem eine zweite Eintrittsöffnung für den Eintritt des Waschfluids und eine zweite Austrittsöffnung für den Austritt einer weiteren Stoffkomponente des Stoffgemisches und des Waschfluids vorgesehen ist, sowie einen Verdrängungsbereich auf, welcher zwischen dem ersten Endbereich und dem zweiten Endbereich vorgesehen ist, wobei der Verdrängungsbereich in den zweiten Endbereich mit einem Übergangsquerschnitt übergeht.

Bei einem gattungsgemäßen Verfahren wird ein Stoffgemisch mit mindestens einer abzutrennenden Stoffkomponente und mit einer weiteren Stoffkomponente an einem ersten Endbereich in einen Behälter eingeleitet und das Waschfluid wird an einem zweiten Endbereich, welcher dem ersten Endbereich bezüglich einer Richtung der Schwerkraft gegenüberliegt, im Gegenstrom zu dem Stoffgemisch in den Behälter eingeleitet. Das Waschfluid verdrängt die mindestens eine abzutrennende Stoffkomponente in einem Verdrängungsbereich des Behälters zumindest teilweise aus dem Stoffgemisch und die verdrängte Stoffkomponente wird am ersten Endbereich und das Waschfluid zusammen mit der mindestens einen weiteren Stoffkomponente am zweiten Endbereich aus dem Behälter abgeführt.

Solche Vorrichtungen und Verfahren werden beispielsweise eingesetzt, um einen Flüssigbestandteil einer Suspension durch einen anderen Flüssigbestandteil zu ersetzen.

Aus der DE 25 11 497 ist ein Verfahren bekannt, bei welchem einer Austauschsäule von oben ein schwerer Mengenstrom und von unten ein Waschfluid als leichter Mengenstrom zugeführt wird. In der Austauschsäule sind Böden und Durchlässe angeordnet, so dass einzelne Verdrängungskammern gebildet werden. Der schwere Mengenstrom strömt von oben in die einzelnen Kammern ein und wird durch die Böden und Durchlässe in eine Rotationsbewegung versetzt. Der schwere Mengenstrom dienst dabei als ein Treibstrahl, der über spezielle Durchlässe in den Böden aus einer weiter unten liegenden Kammer Waschfluid so ansaugt, dass eine intensive Vermischung zwischen dem schweren Mengenstrom und dem Waschfluid erfolgt. Hierdurch soll erreicht werden, dass zumindest eine bestimmte Stoffkomponente des schweren Mengenstroms aus dem Stoffgemisch verdrängt wird, und dass eine weitere Stoffkomponente durch Sedimentation abgetrennt wird, wobei sich die weitere Stoffkomponente in einem unteren Bereich der Austauschsäule absetzt und von dort abführbar sein soll.

Bei einer aus der DE 25 11 497 bekannten Vorrichtung müssen zur Erzeugung eines gewünschten Strömungsverhaltens in den Behältern aufwendige Böden und Durchlässe als Leitelemente installiert werden, was die Vorrichtung insgesamt verteuert. Weiterhin ist auch der Einsatzbereich solcher Vorrichtungen mit fest im Inneren des Behälters angebrachten Leitelementen beschränkt, da das Strömungsverhalten von der Zusammensetzung des Stoffgemisches und des Waschfluids abhängig und somit eine bestimmte Leitelementegeometrie nur für bestimmte Stoffgemische und Waschfluide einsetzbar ist.

Voraussetzung zur Durchführung des bekannten Verfahrens ist, dass sich innerhalb der Austauschsäule ein gewünschtes stabiles Strömungsverhalten einstellt. In der Praxis ist jedoch die Einstellung eines derartigen stabilen Strömungsverhaltens äußerst problematisch und kaum erreichbar, da sich sehr leicht Strömungskanäle in dem Behälter ausbilden und darüber hinaus die einzelnen Ausgangsstoffe in ihrer qualitativen und quantitativen Zusammensetzung häufig größere Schwankungen aufweisen. Zudem wirkt die bei dem gattungsgemäßen Stand der Technik angestrebte intensive Vermischung des Stoffgemisches und des Waschfluids einer effizienten Verdrängung einer Stoffkomponente aus dem Stoffgemisch entgegen.

Eine gattungsgemäße Vorrichtung und ein gattungsgemäßes Verfahren ist in der EP 0 719 576 A1 beschrieben. Um ein Stoffgemisch in dem Behälter möglichst gleichmäßig verteilt zu halten, wird vorgeschlagen, in einem unteren Bereich des Behälters eine Rühreinrichtung vorzusehen. Außerdem wird gelehrt, einen mittleren Bereich des Behälters in eine Vielzahl von parallel zueinander angeordneten Durchtrittsöffnungen zu unterteilen.

Der Erfindung liegt die Aufgabe zugrunde, eine Vorrichtung und ein Verfahren zu schaffen, welche besonders vielseitig einsetzbar sind und mit welchen eine einfache und zugleich besonders effiziente Trennung von zwei unterschiedlichen Stoffkomponenten ermöglicht wird. Die Vorrichtung soll außerdem möglichst einfach und kostengünstig aufgebaut sein.

Diese Aufgabe wird durch die Erfindung vorrichtungsmäßig durch die Vorrichtung nach Patentanspruch 1 und verfahrensmäßig durch das Verfahren nach Patentanspruch 15 gelöst.

Bevorzugte Ausführungsformen der Vorrichtung und vorteilhafte Weiterbildungen des Verfahrens sind in den Unteransprüchen beansprucht.

Eine Vorrichtung der oben angegebenen Art ist erfindungsgemäß dadurch weitergebildet, dass im Bereich des Übergangsquerschnitts für ein flächiges Einleiten eines Waschfluids eine Eintragseinrichtung angeordnet ist, welche mit der zweiten Eintrittsöffnung leitend verbunden ist, und dass zur gezielten Einbringung von Bewegungsenergie in den Verdrängungsbereich mindestens ein Bewegungsorgan vorgesehen ist.

Eine Grundidee der Erfindung liegt darin, dass ein für eine Stofftrennung günstiges Strömungsverhalten innerhalb des Behälters dadurch erzielt werden kann, dass das Waschfluid flächig eingeleitet wird.

Dabei ergab sich die überraschende Erkenntnis, dass ohne aufwendige Einbauten, wie beispielsweise Leitelemente, innerhalb des Behälters hervorragende Trenngrade von weit über 90 % erzielt werden können.

Mit Hilfe des Bewegungsorgans kann das Strömungsverhalten von Stoffgemisch und Waschfluid im Verdrängungsbereich in konstruktiv einfacher Weise gezielt beeinflusst und die Bildung von Strömungskanälen effektiv unterdrückt werden.

Der konstruktive Aufwand und somit die Herstellungskosten können daher bei unverändert gutem oder sogar verbessertem Verfahrensergebnis deutlich reduziert werden.

Bei einer vorteilhaften Weiterbildung der erfindungsgemäßen Vorrichtung weist die Eintragungseinrichtung einen Austrittsbereich auf, welcher dem Übergangsquerschnitt zugewandt ist und die Austrittsfläche ist für eine gleichmäßige Einleitung des Waschfluids über den gesamten Übergangsquerschnitt in den Verdrängungsbereich ausgebildet.

Ein Grund für die sehr guten Verfahrensergebnisse bei flächiger Einleitung des Waschfluids in den Verdrängungsbereich, d.h. mit einer über den Übergangsquerschnitt im Wesentlichen gleichmäßigen Strömungsdichte, kann darin gesehen werden, dass in den Randbereichen sehr wenig Verwirbelungen erzeugt werden.

Bevorzugt ist dabei das Bewegungsorgan als Kreuzbalkenrührer ausgebildet. Ein solcher Kreuzbalkenrührer weist eine Mehrzahl von kreuzartig, senkrecht zur Welle angeordneten Rührelementen auf.

Vorzugsweise ist der Behälter rotationssymmetrisch ausgebildet. Der Behälter kann dann in einfacher Weise aus einem Rohr, insbesondere einem Metallrohr, gefertigt werden.

Der Kreuzbalkenrührer kann axial in dem Behälter angeordnet sein und über eine Antriebseinrichtung rotierend antreibbar sein.

Dadurch wird eine Anordnung ermöglicht, bei welcher die Kreuzbalken jeweils im Wesentlichen eine gesamte Querschnittsfläche des Verdrängungsbereiches durchgreifen.

Besonders gute Ergebnisse können mit einer Vorrichtung erzielt werden, bei der eine Welle einer Rühreinrichtung, beispielsweise eines Kreuzbalkenrührers, vergleichsweise dick, beispielsweise mit dem halben Innendurchmesser des Behälters ausgebildet ist. Bei einer solchen Anordnung werden sehr geringe Geschwindigkeitsunterschiede entlang der horizontalen Rührelemente erreicht.

Bei einem besonders kompakten Aufbau ist die Antriebseinrichtung am ersten Endbereich des Behälters, insbesondere stirnseitig, angeordnet. Der Antrieb kann aber auch an anderer Stelle postiert werden.

Die flächige Einleitung des Waschfluids in den Verdrängungsbereich des Behälters kann besonders gut realisiert werden, wenn das Waschfluid möglichst verwirbelungsfrei bis zu dem Austrittsbereich der Eintragseinrichtung geleitet wird. Dies kann beispielsweise dadurch erreicht werden, dass die zweite Eintrittsöffnung stirnseitig am zweiten Endbereich des Behälters angeordnet ist.

Bei einer weiteren Ausgestaltung der erfindungsgemäßen Vorrichtung ist am zweiten Endbereich des Behälters ein radial aufgeweiteter Bereich vorgesehen, in welchem die Eintragseinrichtung aufgenommen ist. Der radial aufgeweitete Bereich begünstigt eine möglichst verwirbelungsfreie Strömung und erlaubt darüber hinaus eine gute Ableitung der Feststoff-Partikel um die Eintragseinrichtung herum.

Darüber hinaus kann am ersten Endbereich des Behälters ein weiterer radial aufgeweiteter Bereich vorgesehen sein. Mit Hilfe eines solchen weiteren radial aufgeweiteten Bereichs, insbesondere unterhalb der ersten Austrittsöffnung, kann im ersten Endbereich des Behälters die Strömung verlangsamt werden, so dass die Sedimentation von Feststoffbestandteilen verbessert wird und ein Austritt von Feststoffbestandteilen aus der ersten Austrittsöffnung verhindert werden kann.

Bevorzugt ist weiterhin eine Ausführungsform, bei der der Austrittsbereich der Eintragseinrichtung zum gleichmäßigen Einleitens des Waschfluids in den Verdrängungsbereich mit einer Vielzahl kleiner Öffnungen ausgebildet ist. Auf diese Weise kann eine im Wesentlichen gleichmäßige Strömungsdichte des Waschfluids erzielt werden.

Besonders wenig Verwirbelungen entstehen im Verdrängungsbereich, wenn eine Fläche des Austrittsbereichs einer Fläche des Übergangsquerschnitts des Verdrängungsbereiches entspricht. Das Strahlprofil des Waschfluids trifft dann bei geeigneter Anordnung der Eintragseinrichtung genau auf den Übergangsquerschnitt und damit in den Verdrängungsbereich.

Der Austrittsbereich der Eintragseinrichtung kann beispielsweise aus einem porösen Material, insbesondere als poröse Membran, als poröse Platte oder als Fritte aus Glas oder Keramik, ausgebildet sein.

Solche Fritten sind in der Chemie- und Verfahrenstechnik wohlbekannt und kostengünstig erhältlich.

Zweckmäßig ist in diesem Zusammenhang, dass eine mittlere Porengröße des porösen Materials 0,1 µm bis 1 mm, insbesondere 10 bis 50 µm beträgt.

Vorzugsweise wird die erfindungsgemäße Vorrichtung so angeordnet, dass der erste Endbereich des Behälters bezogen auf eine Richtung der Schwerkraft oben und der zweite Endbereich des Behälters unten angeordnet ist. Mit einer solchen Anordnung können beispielsweise schwere Feststoff-Partikel, die in einer ersten Flüssigkeit suspendiert sind, von dieser Flüssigkeit mittels des leichteren Waschfluides getrennt und an der zweiten Austrittsöffnung entnommen werden. Beispielsweise kann es sich bei solchen Feststoff Partikeln um Polymerflocken handeln, welche von einem Lösungsmittel getrennt werden.

Es ist aber auch eine umgekehrte Anordnung der Vorrichtung möglich, d.h. eine Anordnung, bei welcher der erste Endbereich des Behälters bezogen auf eine Richtung der Schwerkraft unten und der zweite Endbereich des Behälters oben angeordnet ist. Dieser Aufbau ist dann sinnvoll, wenn Feststoffpartikel von einer Flüssigkeit getrennt werden sollen, welche schwerer ist als der Feststoff. Ein Beispiel hierfür ist ein Verfahren zur Gewinnung von Trinkwasser aus Meerwasser, bei welchem leichtere Eispartikel von schwererem Salzwasser getrennt werden, wobei als Waschfluid Trinkwasser eingesetzt wird.

Das Verfahren der oben angegebenen Art ist erfindungsgemäß dadurch weitergebildet, dass an einem Übergangsquerschnitt, mit welchem der Verdrängungsbereich in den zweiten Endbereich übergeht, das Waschfluid flächig eingeleitet wird und dass mit mindestens einem Bewegungsorgan gezielt Bewegungsenergie in den Verdrängungsbereich des Behälters eingebracht wird.

Dem erfindungsgemäßen Verfahren liegt als Kernidee wiederum die Erkenntnis zugrunde, dass hervorragende Verfahrensergebnisse durch ein flächiges Einleiten des Waschfluids erzielt werden können und dass grundsätzlich keine Leitelemente oder Kammerungen innerhalb des Behältnisses mehr notwendig sind.

Mit Hilfe des Bewegungsorgans kann die Bildung von Strömungskanälen effektiv unterdrückt werden.

Vorzugsweise wird das Waschfluid gleichmäßig über den gesamten Übergangsquerschnitt in den Verdrängungsbereich eingeleitet. Auf diese Weise kann die Wirbelbildung reduziert werden.

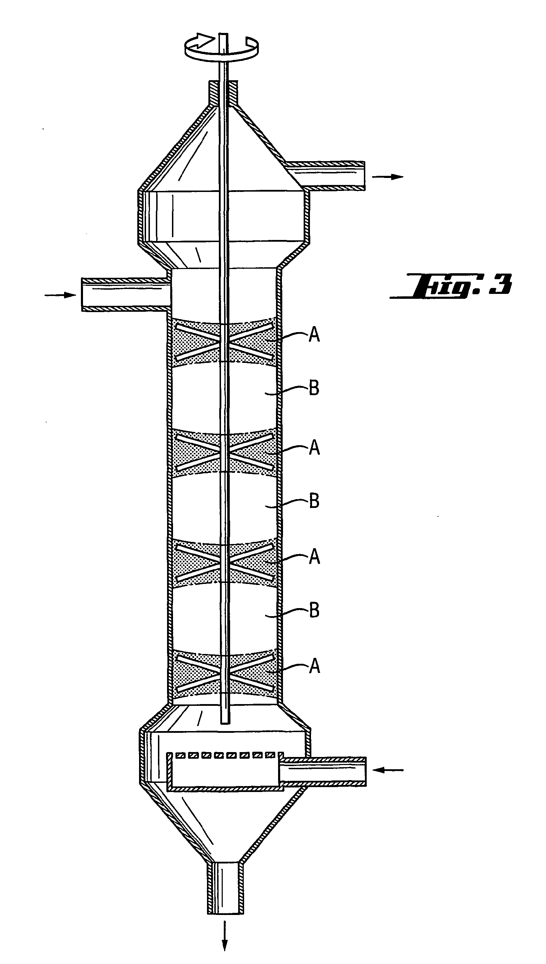

Vorteilhaft ist insbesondere, wenn das Bewegungs- oder Rührorgan anstelle von Schaufeln oder vergleichbaren flächigen Elementen, mit welchen in hohem Maß Verwirbelungen in die Flüssigkeit im Behälter eingebracht werden, schmale, im Wesentlichen senkrecht zur Welle gerichtete Rohre oder Stäbe aufweist. Das Rühren wird dann im Wesentlichen als ein horizontales oder zweidimensionales Rühren oder Mischen durchgeführt, wobei Verwirbelungen weitestgehend vermieden werden. Als Ergebnis einer solchen Vorgehensweise entstehen gerührte Zonen neben ungerührten Bereichen (vgl. Figur 3). In den ungerührten Bereichen findet eine Verdrängungswäsche statt, während durch die gerührten Zonen eine Ausbildung von Strömungskanälen unterdrückt wird.

Es hat sich herausgestellt, dass besonders gute Ergebnisse mit vergleichsweise geringen Drehzahlen einer Rühreinrichtung erzielt werden. Beispielsweise ist es zweckmäßig, dass als Bewegungsorgan ein Kreuzbalkenrührer verwenden wird, welcher mit einer Rotationsgeschwindigkeit von 0,1 U/min bis 100 U/min, insbesondere mit 0,5 U/min bis 10 U/min, angetrieben wird.

Bezüglich Material- und Energieeinsatz ist es günstig, wenn das Verfahren in einem stationären Zustand kontinuierlich betrieben wird. Grundsätzlich ist aber auch ein nichtkontinuierlicher oder stoßweiser Betrieb möglich.

Hinsichtlich des Aufbaus eines solchen stationären Zustandes besteht prinzipiell eine große Freiheit der Prozessführung. Vorzugsweise wird jedoch in einem ersten Verfahrensschritt das Stoffgemisch durch die erste Eintrittsöffnung in den Behälter eingeleitet und anschließend ein Volumenstrom des Waschfluids gezielt eingestellt. Eventuell noch nicht ausreichend von einer abzutrennenden Flüssigkeit getrennte Feststoffpartikel können dann der Vorrichtung erneut durch die erste Eintrittsöffnung zugeführt werden.

Zur Durchführung des erfindungsgemäßen Verfahrens kann die erfindungsgemäße Vorrichtung eingesetzt werden.

Weitere Vorteile und Merkmale der erfindungsgemäßen Vorrichtung und des erfindungsgemäßen Verfahrens werden im Folgenden anhand der schematischen Zeichnungen erläutert.

In diesen Zeichnungen zeigen:
- Fig. 1: eine schematische Darstellung einer ersten Ausführungsform der erfin- dungsgemäßen Vorrichtung und
- Fig. 2: eine schematische Darstellung einer weiteren Ausführungsform der erfindungsgemäßen Vorrichtung.
- Fig. 3: eine schematische Darstellung der gezielten Einbringung von Bewegungse- nergie in den Verdrängungsbereich

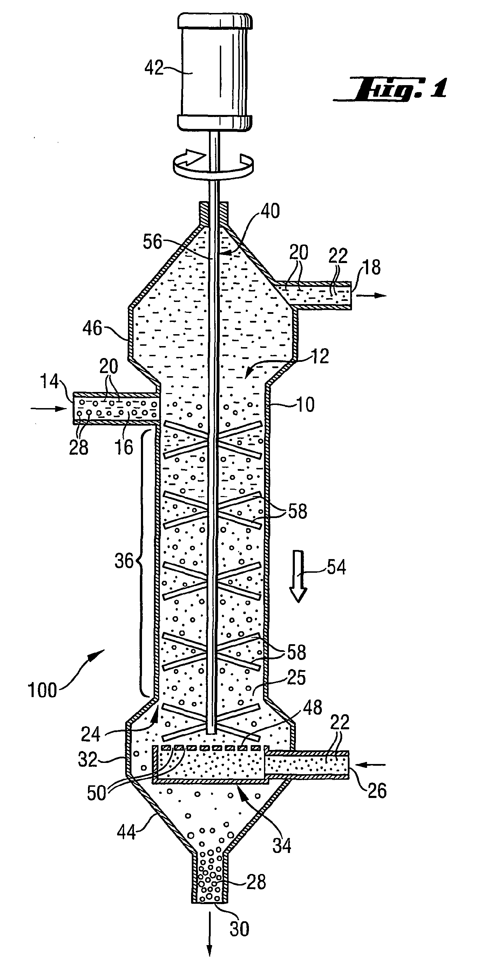

Die Figur 1 zeigt eine erfindungsgemäße Vorrichtung 100, deren Kernbestaridteil ein Behälter 10 ist. An einem ersten Endbereich 12 des Behälters 10 ist eine erste Eintrittsöffnung 14 vorgesehen. An einem zweiten Endbereich 24 ist eine zweite Eintrittsöffnung 26 sowie im Anschluss an einen radial aufgeweiteten Bereich 32 und einen konisch zulaufenden Bereich 44 eine zweite Austrittsöffnung 30 vorgesehen. Eine erste Austrittsöffnung 18 befindet sich am ersten Endbereich 12 im Anschluss an einen weiteren radial aufgeweiteten Bereich 46.

Der Behälter 10 weist im Wesentlichen eine rotationssymmetrische Form auf. Zwischen den ersten Endbereich 12 und dem zweiten Endbereich 24 befindet sich ein Verdrängungsbereich 36, in welchem axial eine Welle 56 eines Kreuzbalkenrühres 40 angeordnet ist. An der Welle 56 ist eine Mehrzahl von Kreuzbalken 58 befestigt. Zum rotierenden Antrieb der Welle 56 ist eine Antriebseinrichtung 42 an einem stirnseitigen Ende am ersten Endbereich 12 des Behälters 10 angeordnet. Der Verdrängungsbereich 36 geht in den zweiten Endbereich 24 mit einem Übergangsquerschnitt 25 über.

Die zweite Eintrittsöffnung 26 ist mit einer Eintragseinrichtung 34 leitend verbunden, die einen Austrittsbereich 48 aufweist. Der Austrittsbereich 48 ist dabei erfindungsgemäß dem Übergangsquerschnitt 25 zugewandt und für ein flächiges Einleiten des Waschfluids 22 in den Verdrängungsbereich 36 ausgebildet.

Der Austrittsbereich 48 ist mit einer Vielzahl von kleinen Öffnungen 50 versehen und ist bevorzugt als Glasfritte mit einer mittleren Porengröße zwischen 10 und 50 µm ausgebildet.

Die in Figur 1 gezeigte Vorrichtung 100 ist so ausgerichtet, dass der erste Endbereich 12 bezogen auf eine Richtung der Schwerkraft 54 oben und der zweite Endbereich 24 unten angeordnet ist.

Eine solche Ausrichtung ermöglicht die Trennung eines Stoffgemisches 16 bestehend aus einer leichteren flüssigen Stoffkomponente 20 und schwereren Feststoff-Partikeln 28, beispielsweise Polymerflocken.

Im Folgenden wird die Durchführung des erfindungsgemäßen Verfahrens mit der in Figur 1 dargestellten Vorrichtung 100 beschrieben.

Zunächst wird das Stoffgemisch 16 in die erste Eintrittsöffnung 14 eingeleitet. Außerdem wird das Waschfluid 22 in die zweite Eintrittsöffnung 26 eingeleitet. Dies kann grundsätzlich sowohl vor als auch nach dem Zuführen des Stoffgemisches 16 geschehen, erfolgt vorzugsweise aber im Anschluss an das Einleiten des Stoffgemisches 16. Der Behälter 10 füllt sich dann zunächst mit dem Gemisch aus der flüssigen, abzutrennenden Stoffkomponente 20 und den Feststoff-Partikeln 28, die aufgrund der Schwerkraft nach unten sinken, d.h. sedimentieren.

Anschließend wird in die zweite Eintrittsöffnung 26 das Waschfluid 22 eingeleitet, welches im Gegenstrom zu dem Stoffgemisch 16 im Behälter 10 nach oben strömt. Die Volumenzufuhr des Waschfluids und/oder des Stoffgemisches 16 wird dann gezielt so eingestellt, bis in einem stationären Zustand gute Stofftrennungsergebnisse erzielt werden.

Aufgrund der erfindungsgemäß vorgesehenen flächigen Einleitung des Waschfluids 32 in den Verdrängungsbereich 36 des Behälters 10 kommt es im Verdrängungsbereich zu einer innigen Wechselwirkung zwischen dem Stoffgemisch 16 und dem Waschfluid 22, welche eine nahezu vollständige Abtrennung der Stoffkomponente 20 von den Feststoff-Partikeln 28 zur Folge hat.

An der ersten Austrittsöffnung 18 tritt dann ein Gemisch aus der flüssigen Stoffkomponente 20 und dem Waschfluid 22 aus. Die gewünschten, von der flüssigen Stoffkomponente 20 befreiten Feststoff-Partikel 28 können dem Behälter 10 an der zweiten Austrittsöffnung 30 entnommen werden.

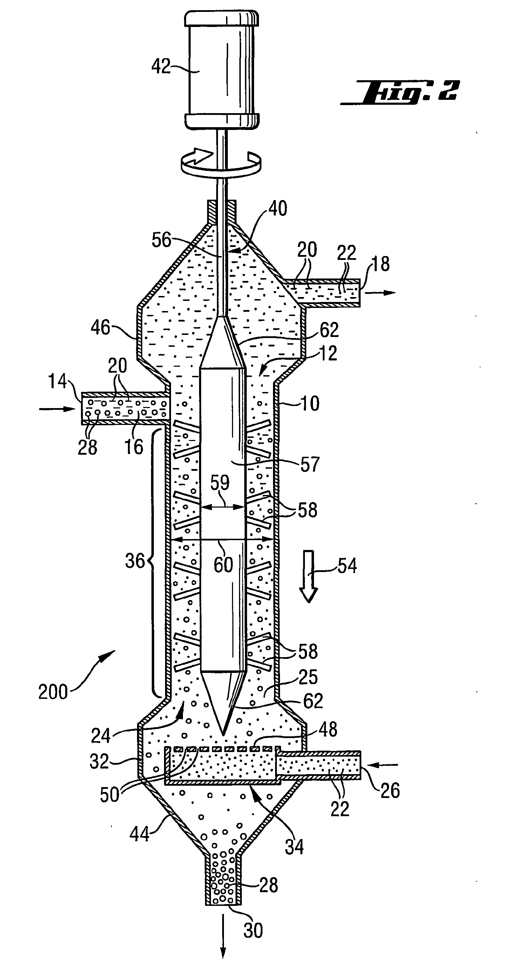

In Figur 2 ist ein weiteres Ausführungsbeispiel einer erfingungsgemäßen Vorrichtung 200 dargestellt. Im Wesentlichen entspricht der Aufbau der Vorrichtung 200 aus Figur 2 demjenigen der Vorrichtung 100 aus Figur 1. Entsprechende Teile sind daher mit denselben Bezugszeichen gekennzeichnet und im Folgenden werden lediglich die Unterschiede beschrieben.

Im Gegensatz zur Vorrichtung 100 aus Figur 1 weist die Vorrichtung 200 aus Figur 2 einen Kreuzbalkenrührer 40 mit einem verdickten Bereich 57 einer Welle 56 auf. Dieser verdickte Bereich 57 erstreckt sich im Wesentlichen über den gesamten Verdrängungsbereich 36 des Behälters 10. Die schematisch gezeigten Rührelemente 58 verlaufen horizontal, also senkrecht zur Welle 56.

Ein Durchmesser 59 der Welle 56 im verdickten Bereich 57 beträgt etwa die Hälfte eines Innendurchmessers 60 des Behälters 10. Im ersten Endbereich 12 und im zweiten Endbereich 24 des Behälters 10 weist der verdickte Bereich 57 der Welle 56 konisch zulaufende Endbereich 62 auf, welche einer Verwirbelung der Flüssigkeiten entgegenwirken und eine laminare Strömung begünstigen.

Bei dieser Vorrichtung erfolgt eine Gegenstromwaschung in einem röhrenförmigen Bereich des Verdrängungsbereiches 36. Hierdurch wird der Vorteil erzielt, dass die Flüssigkeitsteilchen im Unterschied zur Vorrichtung 100 aus Figur 1 deutlich geringere Geschwindigkeitsunterschiede aufweisen. Dadurch kann die Wirbelbildung im Behälter 10 reduziert werden.

Insgesamt erfolgt bei der Vorrichtung 200 die Gegenstromwaschung in dem Behälter 10 in einer im Wesentlichen laminaren Strömung, welche durch langsame Drehung des Kreuzbalkenrührers 40 horizontal oder zweidimensional-verrührt oder vermischt wird. Mit einer solchen Vorrichtung 200 können hervorragende Wasch- und Trennergebnisse von deutlich besser als 90 % erzielt werden.

## Patentansprüche

1. Vorrichtung zur Stofftrennung mittels Gegenstromwaschung mit einem Behälter (10) mit
- einem ersten Endbereich (12), an welchem eine erste Eintrittsöffnung (14) für den Eintritt eines Stoffgemisches (16) und eine erste Austrittsöffnung (18) für den Austritt einer abzutrennenden Stoffkomponente (20) des Stoffgemischs (16) und eines Waschfluids (22) vorgesehen ist,
- einem dem ersten Endbereich (12) axial gegenüberliegenden zweiten Endbereich (24), an welchem eine zweite Eintrittsöffnung (26) für den Eintritt des Waschfluids (22) und eine zweite Austrittsöffnung (30) für den Austritt einer weiteren Stoffkomponente (28) des Stoffgemischs (16) und des Waschfluids (22) vorgesehen ist, sowie
- einem Verdrängungsbereich (36), welcher zwischen dem ersten Endbereich (12) und dem zweiten Endbereich (24) vorgesehen ist, wobei der Verdrängungsbereich (36) in den zweiten Endbereich (24) mit einem Übergangsquerschnitt (25) übergeht,
**dadurch gekennzeichnet,**
- **dass** im Bereich des Übergangsquerschnitts (25) für ein flächiges Einleiten des Waschfluids (22) eine Eintragseinrichtung (34) angeordnet ist, welche mit der zweiten Eintrittsöffnung (26) leitend verbunden ist, und
- **dass** zur gezielten Einbringung von Bewegungsenergie in den Verdrängungsbereich (36) mindestens ein Bewegungsorgan vorgesehen ist.

2. Vorrichtung nach Anspruch 1,
**dadurch gekennzeichnet,**
**dass** die Eintragseinrichtung (34) einen Austritsbereich (48) aufweist, welcher dem Übergangsquerschnitt (25) zugewandt ist und
**dass** der Austrittsbereich (48) für eine gleichmäßige Einleitung des Waschfluids (22) über den gesamten Übergangsquerschnitt (25) in den Verdrängungsbereich (36) ausgebildet ist.

3. Vorrichtung nach einem der Ansprüche 1 oder 2,
**dadurch gekennzeichnet,**
**dass** das Bewegungsorgan als Kreuzbalkenrührer (40) ausgebildet ist.

4. Vorrichtung nach einem der Ansprüche 1 bis 3,
**dadurch gekennzeichnet,**
**dass** der Behälter (10) rotationssymmetrisch ausgebildet ist.

5. Vorrichtung nach Anspruch 4,
**dadurch gekennzeichnet,**
**dass** der Kreuzbalkenrührer (40) axial in dem Behälter (10) angeordnet ist und über eine Antriebseinrichtung (42) rotierend antreibbar ist.

6. Vorrichtung nach Anspruch 5,
**dadurch gekennzeichnet,**
**dass** die Antriebseinrichtung (42) am ersten Endbereich (12) des Behälters (10), insbesondere stirnseitig, angeordnet ist.

7. Vorrichtung nach einem der Ansprüche 1 bis 6,
**dadurch gekennzeichnet,**
**dass** die zweite Eintrittsöffnung (26) stirnseitig am zweiten Endbereich (24) des Behälters (10) angeordnet ist.

8. Vorrichtung nach einem der Ansprüche 1 bis 7,
**dadurch gekennzeichnet,**
**dass** am zweiten Endbereich (24) des Behälters (10) ein radial aufgeweiteter Bereich (33) vorgesehen ist, in welchem die Eintragseinrichtung (34) aufgenommen ist.

9. Vorrichtung nach einem der Ansprüche 1 bis 8,
**dadurch gekennzeichnet,**
**dass** am ersten Endbereich (12) des Behälters (10) ein weiterer radial aufgeweiteter Bereich (46) vorgesehen ist.

10. Vorrichtung nach einem der Ansprüche 1 bis 9,
**dadurch gekennzeichnet,**
**dass** der Austrittsbereich (48) der Eintragseinrichtung (34) zum gleichmäßigen Einleiten des Waschfluids (22) in den Verdrängungsbereich (36) mit einer Vielzahl kleiner Öffnungen (50) ausgebildet ist.

11. Vorrichtung nach einem der Ansprüche 1 bis 10,
**dadurch gekennzeichnet,**
**dass** eine Fläche des Austrittsbereichs (48) einer Fläche des Übergangsquerschnitts (25) des Verdrängungsbereiches (36) entspricht.

12. Vorrichtung nach einem der Ansprüche 1 bis 11,
**dadurch gekennzeichnet,**
**dass** der Austrittsbereich (48) der Eintragseinrichtung (34) aus einem porösen Material, insbesondere als poröse Membran, als poröse Platte oder als Fritte aus Glas oder Keramik, ausgebildet ist.

13. Vorrichtung nach Anspruch 12,
**dadurch gekennzeichnet,**
**dass** eine mittlere Porengröße des porösen Materials 0,1 µm bis 1 mm, insbesondere 10 bis 50 µm, beträgt.

14. Vorrichtung nach einem der Ansprüche 1 bis 13,
**dadurch gekennzeichnet,**
**dass** der erste Endbereich (12) des Behälters (10) bezogen auf eine Richtung (54) der Schwerkraft oben und der zweite Endbereich (24) des Behälters (10) unten angeordnet ist.

15. Verfahren zur Stofftrennung mittels Gegenstromwaschung, bei dem
- ein Stoffgemisch (16) mit mindestens einer abzutrennenden Stoffkomponente (20) und mindestens einer weiteren Stoffkomponente (28) an einem ersten Endbereich (12) in einen Behälter (10) eingeleitet wird,
- das Waschfluid (22) an einem zweiten Endbereich (24), welcher dem ersten Endbereich (12) bezüglich einer Richtung (54) der Schwerkraft gegenüberliegt, im Gegenstrom zu dem Stoffgemisch (16) in den Behälter (10) eingeleitet wird,
- das Waschfluid (22) die mindestens eine abzutrennende Stoffkomponente (20) in einem Verdrängungsbereich (36) des Behälters (10) zumindest teilweise aus dem Stoffgemisch (16) verdrängt und
- die verdrängte Stoffkomponente (20) am ersten Endbereich (12) und das Waschfluid (22) zusammen mit der mindestens einen weiteren Stoffkomponente (28) am zweiten Endbereich (24) aus dem Behälter (10) abgeführt wird,
**dadurch gekennzeichnet,**
- **dass** an einem Übergangsquerschnitt (25), mit welchem der Verdrängungsbereich (36) in den zweiten Endbereich (24) übergeht, das Waschfluid (22) flächig eingeleitet wird und
**dass** mit mindestens einem Bewegungsorgan gezielt Bewegungsenergie in den Verdrängungsbereich (36) des Behälters (10) eingebracht wird.

16. Verfahren nach Anspruch 15,
**dadurch gekennzeichnet,**
**dass** das Waschfluid (22) gleichmäßig über den gesamten Übergangsquerschnitt (25) in den Verdrängungsbereich (36) eingeleitet wird.

17. Verfahren nach einem der Ansprüche 15 oder 16,
**dadurch gekennzeichnet,**
**dass** als Bewegungsorgan ein Kreuzbalkenrührer (40) verwendet wird, welcher mit einer Rotationsgeschwindigkeit von 0,1 U/min bis 100 U/min, insbesondere mit 0,5 U/min bis 10 U/min, angetrieben wird.

18. Verfahren nach einem der Ansprüche 15 bis 17,
**dadurch gekennzeichnet,**
**dass** in einem ersten Verfahrensschritt das Stoffgemisch (16) durch die erste Eintrittsöffnung (14) in den Behälter (10) eingeleitet wird und dass anschließend ein Volumenstrom des Waschfluids (22) gezielt eingestellt wird.

19. Verfahren nach einem der Ansprüche 15 bis 18,
**dadurch gekennzeichnet,**
**dass** das Verfahren in einem stationären Zustand kontinuierlich betrieben wird.

## Claims

1. A device for separating substances by means of countercurrent washing, having a container (10) with
- a first end region (12), at which a first inlet orifice (14) for the ingress of a substance mixture (16) and a first outlet orifice (18) for the egress of a substance component (20) to be separated from the substance mixture (16) and of a washing fluid (22) are provided,
- a second end region (24) which is located axially opposite the first end region (12) and at which a second inlet orifice (26) for the ingress of the washing fluid (22) and a second outlet orifice (30) for the egress of a further substance component (28) of the substance mixture (16) and of the washing fluid (22) are provided, and
- a displacement region (36) which is provided between the first end region (12) and the second end region (24), the displacement region (36) merging into the second end region (24) by a transitional cross section (25),
**characterized**
- **in that** a feed means (34), which is connected conductively to the second inlet orifice (26), is arranged in the region of the transitional cross section (25) for introducing the washing fluid (22) over a large area, and
- **in that** at least one movement member is provided for the controlled introduction of kinetic energy into the displacement region (36).

2. The device as claimed in claim 1, **characterized in that** the feed means (34) has an outlet region (48) which faces the transitional cross section (25), and **in that** the outlet region (48) is designed for a uniform introduction of the washing fluid (22) into the displacement region (36) over the entire transitional cross section (25).

3. The device as claimed in one of claims 1 or 2, **characterized in that** the movement member is designed as a crossbar agitator (40).

4. The device as claimed in one of claims 1 to 3, **characterized in that** the container (10) is of rotationally symmetric design.

5. The device as claimed in claim 4, **characterized in that** the crossbar agitator (40) is arranged axially in the container (10) and can be driven in rotation via a drive means (42).

6. The device as claimed in claim 5, **characterized in that** the drive means (42) is arranged at the first end region (12) of the container (10), in particular on the end face.

7. The device as claimed in one of claims 1 to 6, **characterized in that** the second inlet orifice (26) is arranged at the second end region (24) of the container (10) on the end face.

8. The device as claimed in one of claims 1 to 7, **characterized in that** a radially widened region (33), in which the feed means (34) is received, is provided at the second end region (24) of the container (10).

9. The device as claimed in one of claims 1 to 8, **characterized in that** a further radially widened region (46) is provided at the first end region (12) of the container (10).

10. The device as claimed in one of claims 1 to 9, **characterized in that** the outlet region (48) of the feed means (34) is designed with a multiplicity of small orifices (50) for the uniform introduction of the washing fluid (22) into the displacement region (36).

11. The device as claimed in one of claims 1 to 10, **characterized in that** an area of the outlet region (48) corresponds to an area of the transitional cross section (25) of the displacement region (36).

12. The device as claimed in one of claims 1 to 11, **characterized in that** the outlet region (48) of the feed means (34) is formed from a porous material, in particular as a porous diaphragm, as a porous plate or as a frit consisting of glass or ceramic.

13. The device as claimed in claim 12, **characterized in that** a mean pore size of the porous material is 0.1 µm to 1 mm, in particular 10 to 50 µm.

14. The device as claimed in one of claims 1 to 13, **characterized in that** the first end region (12) of the container (10) is arranged at the top and the second end region (24) of the container (10) is arranged at the bottom in relation to a direction (54) of gravity.

15. A method for separating substances by means of countercurrent washing, in which
- a substance mixture (16) with at least one substance component (20) to be separated and with at least one further substance component (28) is introduced into a container (10) at a first end region (12),
- the washing fluid (22) is introduced into the container (10), in countercurrent to the substance mixture (16), at a second end region (24) which is located opposite the first end region (12) in relation to a direction (54) of gravity,
- the washing fluid (22) displaces the at least one substance component (20) to be separated at least partially out of the substance mixture (16) in a displacement region (36) of the container (10), and
- the displaced substance component (20) is discharged from the container (10) at the first end region (12) and the washing fluid (22) , together with the at least one further substance component (28), is discharged from the container (10) at the second end region (24),
**characterized**
- **in that** the washing fluid (22) is introduced over a large area at a transitional cross section (25) by which the displacement region (36) merges into the second end region (24), and in that kinetic energy is introduced into the displacement region (36) of the container (10) in a controlled manner by means of least one movement member.

16. The method as claimed in claim 15, **characterized in that** the washing fluid (22) is introduced into the displacement region (36) uniformly over the entire transitional cross section (25).

17. The method as claimed in one of claims 15 or 16, **characterized in that** the movement member used is a crossbar agitator (40) which is driven at a rotational speed of 0.1 rev/min to 100 rev/min, in particular at 0.5 rev/min to 10 rev/min.

18. The method as claimed in one of claims 15 to 17, **characterized in that**, in a first method step, the substance mixture (16) is introduced into the container (10) through the first inlet orifice (14), and **in that**, subsequently, a volume flow of the washing fluid (22) is set in a controlled manner.

19. The method as claimed in one of claims 15 to 18, **characterized in that** the method is operated continuously in a steady state

## Revendications

1. Dispositif de séparation de matières par lavage à contre-courant, qui présente un récipient (10) doté de :
- une partie d'extrémité (12) sur laquelle sont prévues une première ouverture d'entrée (14) qui permet l'entrée d'un mélange de matière (16) et une première ouverture de sortie (18) qui permet la sortie d'un composant (20) à séparer du mélange de matière (16) et d'un fluide de lavage (22),
- une deuxième partie d'extrémité (24) située axialement face à la première partie d'extrémité (12) et sur laquelle sont prévues une première ouverture d'entrée (26) qui permet l'entrée du fluide de lavage (22) et une deuxième ouverture de sortie (30) qui permet la sortie d'un autre composant (28) du mélange de matières (16) et du fluide de lavage (22), ainsi que de
- une partie de refoulement (36) disposée entre la première partie d'extrémité (12) et la deuxième partie d'extrémité (24), la partie de refoulement (36) se prolongeant en la deuxième partie d'extrémité (24) par une section transversale de transition (25),
**caractérisé en ce que**
- un dispositif d'introduction (34) relié à écoulement à la deuxième ouverture d'entrée (26) est disposé dans la partie occupée par la section transversale de transition (25) de manière à introduire le fluide de lavage (22) à plat et **en ce que**
- au moins un organe de déplacement est prévu pour apporter de manière contrôlée l'énergie de déplacement dans la partie de refoulement (36).

2. Dispositif selon la revendication 1, **caractérisé en ce que** le dispositif d'introduction (34) présente une partie de sortie (48) tournée vers la section transversale de transition (25) et **en ce que** la partie de sortie (48) est formée dans la partie de refoulement (36) de manière à introduire le fluide de lavage (22) de manière uniforme sur toute la section transversale de transition (25).

3. Dispositif selon l'une des revendications 1 ou 2, **caractérisé en ce que** l'organe de déplacement est configuré comme agitateur (40) à barreaux croisés.

4. Dispositif selon l'une des revendications 1 à 3, **caractérisé en ce que** le récipient (10) est symétrique en rotation.

5. Dispositif selon la revendication 4, **caractérisé en ce que** l'agitateur (40) à barreaux croisés est disposé axialement dans le récipient (10) et peut être entraîné en rotation par un dispositif d'entraînement (42).

6. Dispositif selon la revendication 5, **caractérisé en ce que** le dispositif d'entraînement (42) est disposé sur la partie d'extrémité (12) du récipient (10) et en particulier sur son côté frontal.

7. Dispositif selon l'une des revendications 1 à 6, **caractérisé en ce que** la deuxième ouverture d'entrée (26) est disposée frontalement sur la deuxième partie d'extrémité (24) du récipient (10).

8. Dispositif selon l'une des revendications 1 à 7, **caractérisé en ce qu'**une partie radialement évasée (33) dans laquelle est logé le dispositif d'introduction (34) est prévue sur la deuxième partie d'extrémité (24) du récipient (10).

9. Dispositif selon l'une des revendications 1 à 8, **caractérisé en ce qu'**une autre partie radialement évasée (46) est prévue sur la première partie d'extrémité (12) du récipient (10).

10. Dispositif selon l'une des revendications 1 à 9, **caractérisé en ce que** la partie de sortie (48) du dispositif d'introduction (34) est configurée avec plusieurs petites ouvertures (50) pour introduire le fluide de lavage (22) de manière uniforme dans la partie de refoulement (36).

11. Dispositif selon l'une des revendications 1 à 10, **caractérisé en ce que** la superficie de la partie de sortie (48) correspond à la superficie de la section transversale de transition (25) de la partie de refoulement (36).

12. Dispositif selon l'une des revendications 1 à 11, **caractérisé en ce que** la partie de sortie (48) du dispositif d'introduction (34) est réalisée en un matériau poreux, en particulier comme membrane poreuse, comme plaque poreuse ou comme fritte de verre ou de céramique.

13. Dispositif selon la revendication 12, **caractérisé en ce que** la taille moyenne des pores du matériau poreux est comprise entre 0,1 µm et 1 mm et en particulier entre 10 et 50 µm.

14. Dispositif selon l'une des revendications 1 à 13, **caractérisé en ce que** la première partie d'extrémité (12) du récipient (10) est disposée dans le haut et la deuxième partie d'extrémité (24) du récipient (10) dans le bas dans la direction (54) d'action de la gravité.

15. Procédé de séparation de matières par lavage à contre-courant, dans lequel :
- un mélange de matières (16) qui présente au moins un composant (20) à séparer et au moins un autre composant (28) est introduit dans un récipient (10) par une première partie d'extrémité (12),
- le fluide de lavage (22) est introduit dans le récipient (10) à contre-courant du mélange de matière (16) par une deuxième partie d'extrémité (24) qui est située face à la première partie d'extrémité (12) dans la direction (54) d'action de la gravité,
- dans une partie de refoulement (36) du récipient (10), le fluide de lavage (22) refoule au moins une partie du composant (20) à séparer du mélange de matière (16) et
- le composant refoulé (20) est évacué par la première partie d'extrémité (12) et le fluide de lavage (22) est évacué du récipient (10) en même temps que le ou les autres composants (28) par la deuxième partie d'extrémité (24),
**caractérisé en ce que**
- le fluide de lavage (22) est introduit à plat dans une section transversale de transition (25) par laquelle la partie de refoulement (36) se prolonge en la deuxième partie d'extrémité (24) et
- **en ce que** de l'énergie de déplacement est apportée dans la partie de refoulement (36) du récipient (10) à l'aide d'au moins un organe de déplacement.

16. Procédé selon la revendication 15, **caractérisé en ce que** le fluide de lavage (22) est introduit uniformément sur toute la section transversale de transition (25) dans la partie de refoulement (36).

17. Procédé selon l'une des revendications 15 ou 16, **caractérisé en ce que** comme organe de déplacement, il utilise un agitateur (40) à barreaux croisés qui est entraîné à une vitesse de rotation de 0,1 tour/min à 100 tours/min et en particulier de 0,5 tour/min à 10 tours/min.

18. Procédé selon l'une des revendications 15 à 17, **caractérisé en ce que** dans une première étape du procédé, le mélange de matières (16) est introduit dans le récipient (10) par la première ouverture d'entrée (14) et **en ce qu'**un écoulement volumique du fluide de lavage (22) est ensuite établi de manière contrôlée.

19. Procédé selon l'une des revendications 15 à 18, **caractérisé en ce que** le procédé est conduit en continu et en conditions stationnaires.
